# EUROPEAN PATENT SPECIFICATION

(11) **EP 0 625 094 B1**
(45) Date of publication and mention of the grant of the patent: **01.05.1996**
(21) Application number: 93904173.7
(22) Date of filing: 05.02.1993
(51) Int. Cl.: B32B 5/28

(54) **A POLYMER MATRIX COMPOSITE STRUCTURE INCLUDING METALLISED FIBRES AND A METHOD OF PRODUCING IT**
EINE VERBUNDSTRUKTUR AUS METALLISIERTEN FASERN IN POLYMERMATRIX, SOWIE VERFAHREN ZUR HERSTELLUNG
STRUCTURE COMPOSITE A MATRICE POLYMERE COMPRENANT DES FIBRES METALLISEES ET PROCEDE DE PRODUCTION

(30) Priority: 07.02.1992 GB 9202643
(43) Date of publication of application: 23.11.1994
(73) Proprietor: LUCAS INDUSTRIES PUBLIC LIMITED COMPANY, Solihull, West Midlands B90 3TX (GB)
(72) Inventor: JONES, Mark De Cooper, Redditch, Worcestershire B97 5NE (GB)
(74) Representative: Spall, Christopher John
(86) International application number: GB9300252
(87) International publication number: WO9315904

(56) References cited:
- EP-A- 0 206 721
- EP-A- 0 465 399
- GB-A- 731 812
- US-A- 4 522 889
- Patent Abstracts of Japan, Vol 9, No 211, C-300, 1989-11-07, abstract of JP, 60-77151 (ASAHI GLASS K.K.),
- Patent Abstracts of Japan, Vol 10, No 303, C-378, 1989-11-07, abstract of JP, 61-117136 (ASAHI GLASS CO LTD),

## Description

This invention relates to improvements in polymer matrix composite structures of the kind including metallised fibres in a polymer material for electrical purposes.

It is known to produce polymer matrix composite structures of the kind set forth by incorporation of metal fibres, application of electrically conductive coatings to fibres, or incorporation of electrically conductive fillers. In the case of the fibre type knitted or woven into fabrics, such fabrics, in turn, are shaped to the required pre-form configuration.

Wet surface metallisation of the polymer matrix composite structures reduces the properties and stability of the polymer component. Metallised fabrics for EMC electro-magnetic compatability suffer from poor pre-form capability and poor performance for EMC due to conductivity attrition during the formation of the pre-form.

It is known, for example from GB-A-2 118 477, to use an injection moulding technique for moulding an insulating liner onto a metal spool.

We are also aware of EP-A-0 074 263 which discloses the use of woven fabric reinforced laminates comprising filaments of electrically conductive material, suitably metal, metal coated fibre glass, Kevlar (Registered Trade Mark), or carbon.

It is known from US-A-4 522 889 to produce a composite material from a woven fabric which is metallised under chemical currentless conditions and then embedded in a plastics matrix.

Patent Abstracts of Japan, Vol.9., No. 211, C-300, abstract of JP-A-60-77151, discloses a method of obtaining metal-coated glass fibres, using electroless plating, which are then either individually moulded, lined or inserted into a casing or cover or are further incorporated into a plastic and moulded into a fibre reinforced plastic (FRP) product.

According to our invention a polymer matrix composite structure of the kind set forth is produced by taking a fibre reinforcement substrate, pre-forming the substrate to produce a pre-form of a desired shape and configuration, metallising the pre-form to provide an electrically conductive coating for EMC capability, and impregnating the metallised pre-form with resin.

The metallised fibres may comprise fibres of glass, or carbon.

We therefore provide a polymer matrix composite structure of high mechanical performance since the advantageous bulk properties and dimensional tolerances of conventional composites are retained, accompanied by higher stability of metallisation since the coating is protected from the environment. We are also able to achieve high shape complexity at low capital cost with the capability to include thermal control measures in the material structure.

By the use of this process we are able to produce complex polymer matrix composite structures having high mechanical and electro-magnetic compatability (EMC) and a selective thermal management capability.

The substrate may comprise a reinforcement material in a woven, knitted or continuous fibre form which maybe cut and then pre-shaped to the desired shape and configuration of the pre-form.

Knitted substrates are preferred, as this maximises conductivity in the surface, by minimising the non-conductive paths formed by any fibres overlapping in the plane of the fabric, such as in plain woven fabrics, due to shadowing from the metallisation source. With woven fabrics, low profile satin weave fabrics reduce this effect. With unwoven unidirectional fabrics the substrate shows significant directionality, due to the metallisation following the fabric direction. This can be beneficial in providing high electrical conduction in certain directions in the multi-layer laminate produced by combining multiple orientated fabric layers in the material. This is of less relevance if wet metallisation techniques are employed, but still significant. However the three dimensional electrically conductive network produced specifically by metallising the knitted fabric structure by penetrating magnetron sputtering (PVD coating), has shown electrical resistivities 10¹ to 10⁶ less than equivalent coatings on woven structures, i.e., ^{∼}10⁻² ohms/square (surface resistivity). The coating in this case was NI-Cr(0.1-0.3µm)/Cu(1-3µm)/Au(^{∼}0.1µm), and was as thin as feasible to achieve useful conductivity, in order to achieve minimum weight increase and coating process time. However increases in the electrical conductivity through the use of thicker PVD coatings and different coating metals can be conveniently achieved. Alternatively conductivity can be increased by subsequent overcoating by metal spraying or wet metallisation techniques, e.g. electroless plating. However metal spraying is line of sight, which adversely limits the preform geometry which can be satisfactorily coated. It also yields thick, heavy deposits. Wet coating introduces problems with controlling penetration of the coating into the fabric substrate, but produces uniform coating coverage, largely independent of substrate geometry.

Metallisation of the pre-form may be achieved by using a Physical Vapour Deposition (PVD) method, or wet metallisation techniques.

After metallisation, the pre-form is net shape to be moulded into component form, preferably using the Resin Transfer Moulding (RTM) technique. In such a construction the mould resin infiltrates the pre-form with the benefit of encapsulation of the metallisation, preventing deterioration of the metallisation by outside elements.

This has the advantage of producing little or no attrition of the conductive network produced in metallisation. Thus the maximum conductivity, and hence EMI attenuation can be achieved, and retained throughout component life. Unlike with woven fabrics with metallisation included, the action of the RTM impregnating resin cannot separate and disrupt the conductive paths formed by the touching of coated fibres.

Some embodiments of our invention are illustrated in the accompanying drawings in which:-
Figure 1 is a perspective view of a woven fabric;
Figure 2 shows the fabric in a developed form suitable to form a pre-form;
Figure 3 illustrates a developed pre-form similar to Figure 2 but which is knitted to the desired shape;
Figure 4 shows the developed pre-forms of Figures 2 and 3 deformed to form the pre-form;
Figure 5 is a section through the material of the pre-form following metallisation; and
Figure 6 is a section through a mould showing the injection of resin into a cavity containing the pre-form.

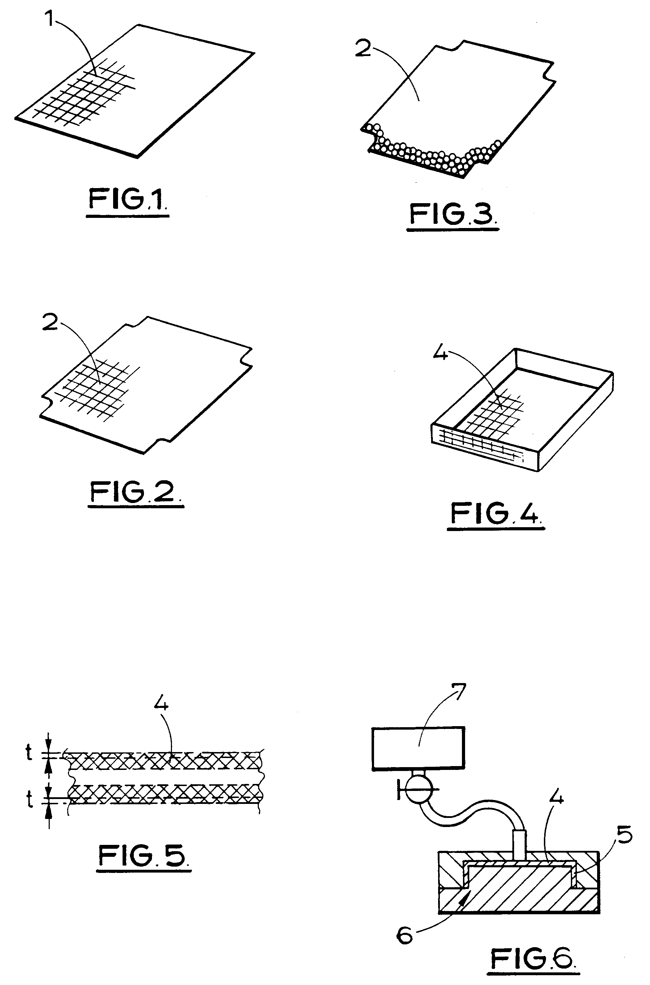

Figure 1 of the drawing illustrates fibres, for example of glass, or carbon, woven to form a sheet 1. The sheet is then cut to the developed form of a desired pre-form as shown in Figure 2 of the drawings.

Alternatively, as shown in Figure 3, the developed pre-form 2, illustrated in Figure 2, can be produced in a single knitting operation.

The fibres forming the developed pre-forms of Figures 2 or 3 comprise thermo-formable synthetic resins acting as binders to achieve shape retention in the shaped pre-form.

The developed pre-forms can be pressed when hot to a suitable net shape, for example as shown in Figure 4 in the configuration of a rectangular box 4. After hot pressing the shape is allowed to cool to fix the configuration of the pre-form.

In a modification the knitted developed pre-form of Figure 3 can be placed in a tool and stitched to the necessary shape, for example to the shape of a box having the configuration illustrated in Figure 4 of the accompanying drawings.

After formation of the pre-form illustrated in Figure 4 metal inserts, for fastening mechanisms, or for heat sinking, can be introduced into the structure.

The pre-form of Figure 4 is then metallised, suitably by the use of a metal sputtering Physical Vapour Deposition (PVD) method. This can produce non-line of sight coating and the ability to electrically bias the pre-form to control coating response. The metallisation produces high conducting surfaces on the outside of the pre-form but also penetrates the "open" surface of the pre-form to produce a graduated depth coating, as illustrated in Figure 5 of the drawings, in which the penetration of metal is indicated by "t". If necessary a number of pre-forms can be "staged" to produce a multi-conducting layer assembly.

Finally the metallised pre-form 4 is placed in the cavity 5 of a two-part resin injection (moulding) apparatus 6 illustrated in Figure 6 of the drawings. Synthetic resin is injected into the cavity from an injector 7 in order to impregnate the metallised pre-form with a synthetic resin to form a composite material.

The presence of sub-surface metallisation ensures that upon resin impregnation during the step illustrated in Figure 6 of the drawings the Electro Magnetic Interference (EMI) attenuation layers will not be exposed to degeneration by the environment and will be insensitive to de-lamination damage from abuse.

Similar but less convenient metallisation (i.e. not a one-shot process and limited coating depth control), can also be achieved by wet electroless plating, for example nickel plating of the fibre pre-form assembly.

The RTM moulded metallised pre-form part produced by the method described above has high mechanical performance, and high EMC performance, retained with time. The RTM process can produce highly complex parts at low capital and tool costs. Provision of grounding of the metallisation along component edges is straightforward to achieve. For example tooling can be designed so that the pre-forms have an unimpregnated zone at the component edge which can subsequently interface with an EMC gasket, or can allow flow soldering of an electrical contact shim. This ensures high levels of EMT capability.

## Claims

1. A method of producing a polymer matrix composite structure of the kind including metallised fibres in a polymer material for electrical purposes, by starting with a fibre reinforcement substrate (1) and characterised in that the method comprises the steps of:
a) pre-forming the substrate (1) to produce a pre-form (4) of a desired shape and configuration;
b) metallising the pre-form (4) to produce an electrically conductive coating for EMC (electro-magnetic compatibility) capability; and
c) impregnating the metallised pre-form (4) with resin.

2. A method according to claim 1, including the step of adapting the substrate (1) into a developed pre-form (2) before forming the substrate into the pre-form (4).

3. A method according to claim 2, in which the substrate (1) comprises a woven sheet, and a cutting step is utilised to adapt the sheet to the developed pre-form (2).

4. A method according to claim 2, in which the substrate in the configuration of the developed pre-form (2) is formed by knitting operation.

5. A method according to any of Claims 1 to 3, wherein the fibres forming the developed preform comprise thermoformable synthetic resins, and including the step of pressing the developed preform (2) into a suitable shape when hot.

6. A method according to any of claims 1, 2 and 4 comprising stitching the developed pre-form (2) into a suitable shape.

7. A method according to any preceding claim, including the step of introducing metal inserts into the structure between steps a) and b) for control of local thermal conductivity.

8. A method according to any preceding claim, including using a metal sputtering Physical Vapour Deposition (PVD) method for carrying out step b).

9. A method according to any of claims 1-7, including using wet electroless plating for carrying out step b).

10. A method according to any preceding claim, in which step c) is carried out by the use of a Resin Transfer Moulding (RTM) technique.

11. A polymer matrix structure produced by the method of claim 1 or claim 2, in which the fibre structure contains thermo-formable synthetic resins which act as binders to achieve shape retention in the shaped pre-form.

12. A structure as claimed in claim 11, in which the substrate (1) comprises a reinforcement material in a woven, knitted or continuous fibre random or unidirectional form.

13. A structure as claimed in claim 11, in which the pre-form has an unimpregnated zone at an edge of the component for electrical grounding purposes.

14. A structure as claimed in claim 11 or claim 12, in which flow soldering of an electrical contact shim is provided around the periphery of the component for electrical grounding purposes.

## Patentansprüche

1. Verfahren zur Herstellung eines Polymermatrix-Verbundgefüges mit metallisierten Fasern in einem Polymermaterial für elektrische Zwecke, wobei von einem Faserverstärkungs-Substrat (1) ausgegangen wird, dadurch gekennzeichnet, daß das Verfahren die Schritte umfaßt:
a) Vorformen des Substrats (1) zur Bildung einer Vorform (4) von gewünschter Gestalt und Konfiguration;
b) Metallisieren der Vorform (4) zur Erzeugung einer elektrisch leitenden Beschichtung zur Erzielung elektromagnetischer Verträglichkeit; und
c) Tränken der metallisierten Vorform (4) mit Harz.

2. Verfahren nach Anspruch 1,
mit dem Schritt des Bringens des Substrats (1) in eine abgewickelte Vorform (2) vor dem Formen desselben in eine Vorform (4).

3. Verfahren nach Anspruch 2,
bei dem das Substrat (1) eine gewebte Lage umfaßt und ein Schneidschritt durchgeführt wird, um die Lage in die abgewickelte Vorform (2) zu bringen.

4. Verfahren nach Anspruch 2,
bei dem das Substrat in der Konfiguration der abgewickelten Vorform (2) durch Wirken gebildet wird.

5. Verfahren nach einem der Ansprüche 1 bis 3,
bei dem die die abgewickelte Vorform bildenden Fasern warmformbare Kunstharze aufweisen, und einschließend den Schritt des Pressens der abgewickelten Vorform (2) im heißen Zustand in eine geeignete Gestalt.

6. Verfahren nach einem der Ansprüche 1, 2 und 4,
wobei die abgewickelte Vorform (2) durch Nähen in eine geeignete Gestalt gebracht wird.

7. Verfahren nach einem der vorhergehenden Ansprüche,
einschließend den Schritt des Einbringens von Metalleinlagen in das Gefüge zwischen den Schritten a) und b) zur Steuerung der örtlichen Wärmeleitfähigkeit.

8. Verfahren nach einem der vorhergehenden Ansprüche,
einschließend das Verwenden eines Physical Vapour Deposition (PVD)-Metallbesputterungsverfahrens zur Durchführung des Schrittes b).

9. Verfahren nach einem der Ansprüche 1 bis 7,
einschließend das Verwenden der stromlosen Naßplattierung zur Durchführung des Schrittes b).

10. Verfahren nach einem der vorhergehenden Ansprüche,
bei dem Schritt c) durch die Anwendung einer RTM (Resin Transfer Moulding) Technik durchgeführt wird.

11. Polymermatrix-Gefüge hergestellt nach dem Verfahren gemäß Anspruch 1 oder Anspruch 2,
bei dem das Fasergefüge warmformbare Kunstharze enthält, die als Bindemittel wirken, um eine Formbeständigkeit der in Gestalt gebrachten Vorform zu erreichen.

12. Gefüge nach Anspruch 11,
bei dem das Substrat (1) ein Verstärkungsmaterial in Form eines Gewebes, eines Gewirkes oder in Form endloser Fasern in regelloser oder unidirektionaler Anordnung aufweist.

13. Gefüge nach Anspruch 11,
bei dem die Vorform an einem Rand des Teiles einen nichtgetränkten Bereich für die elektrische Erdung aufweist.

14. Gefüge nach Anspruch 11 oder Anspruch 12,
bei dem entlang des Umfangs des Teiles das Schwall-Löten einer elektrischen Kontaktscheibe zur elektrischen Erdung vorgenommen ist.

## Revendications

1. Procédé de production d'une structure composite à matrice polymère du type comprenant des fibres métallisées dans une matière polymère pour des besoins électriques, à partir d'un substrat de renforcement à base de fibres (1) et caractérisé en ce que le procédé comprend les étapes consistant:
a) à préformer le substrat (1) pour produire une préforme (4) de forme et de configuration souhaitées;
b) à métalliser la préforme (4) pour produire un revêtement conducteur de l'électricité pour une faculté EMC (compatibilité électromagnétique); et
c) à imprégner la préforme métallique (4) avec de la résine.

2. Procédé selon la revendication 1, comprenant l'étape d'adaptation du substrat (1) dans une préforme développée (2) avant la formation du substrat en une préforme (4).

3. Procédé selon la revendication 2, dans lequel le substrat (1) comprend une feuille tissée, et dans lequel une étape de coupe est utilisée pour adapter la feuille à la préforme développée.

4. Procédé selon la revendication 2, dans lequel le substrat dans la configuration de la préforme développée (2) est formé à l'aide d'une opération de tricotage.

5. Procédé selon l'une quelconque des revendications 1 à 3, dans lequel les fibres formant la préforme développée comprennent des résines synthétiques thermoformables, et comprenant l'étape consistant à presser la préforme développée (2) en une forme appropriée lorsqu'elle est chaude.

6. Procédé selon l'une quelconque des revendications 1, 2 et 4 comprenant la couture de la préforme développée (2) en une forme appropriée.

7. Procédé selon l'une quelconque des revendications précédentes comprenant l'étape consistant à introduire des inserts métalliques dans la structure entre les étapes a) et b) pour maîtriser la conductivité thermique locale.

8. Procédé selon l'une quelconque des revendications précédentes, comprenant l'utilisation d'un procédé de dépôt en phase vapeur (PVD) par pulvérisation cathodique de métal pour réaliser l'étape b).

9. Procédé selon l'une quelconque des revendications 1 à 7, comprenant l'utilisation de placage autocatalytique par voie humide pour réaliser l'étape b).

10. Procédé selon l'une quelconque des revendications précédentes, dans lequel l'étape c) est réalisée grâce à l'utilisation d'une technique de moulage par transfert de résine (RTM).

11. Structure à matrice polymère produite à l'aide du procédé selon la revendication 1 ou 2, dans laquelle la structure de fibre contient des résines synthétiques thermoformables qui agissent en tant que liants pour obtenir un maintien de la forme dans la préforme façonnée.

12. Structure selon la revendication 11, dans laquelle le substrat (11) comprend une matière de renforcement dans une forme unidirectionnelle ou aléatoire de fibre tissée, tricotée ou continue.

13. Structure selon la revendication 11, dans laquelle la préforme a une zone non-imprégnée au niveau d'un côté du composant pour des besoins de mise à la terre électrique.

14. Structure selon la revendication 11 ou 12, dans laquelle une soudure à la vague d'une rondelle de contact électrique est prévue autour de la périphérie du composant pour des besoins de mise à la terre électrique.
